# EUROPEAN PATENT SPECIFICATION

(11) **EP 2 055 534 B1**
(45) Date of publication and mention of the grant of the patent: **17.04.2013**
(21) Application number: 07806295.7
(22) Date of filing: 23.08.2007
(51) Int. Cl.: B60R 13/10, G02B 5/12, G09F 7/00, G09F 13/16, G09F 19/14

(54) **VEHICLE LICENSE PLATE AND RETROREFLECTIVE SHEET USED FOR THE SAME**
KENNZEICHENTAFEL UND RÜCKSTRAHLENDE FOLIE DAFÜR
PLAQUE D'IMMATRICULATION DE VEHICULE ET FEUILLE RETROREFLECHISSANTE UTILISEE POUR CELLE-CI

(30) Priority: 23.08.2006 JP 2006226214
(43) Date of publication of application: 06.05.2009
(73) Proprietor: NIPPON CARBIDE KOGYO KABUSHIKI KAISHA, Tokyo 108-8466 (JP)
(72) Inventor: IMAI, Yasushi, Toyama-shi, Toyama 9300103 (JP); TAKEDA, Yukihiro, Tokyo 1088466 (JP)
(74) Representative: HOFFMANN EITLE
(86) International application number: PCT/JP2007/066818
(87) International publication number: WO 2008/023834

(56) References cited:
- EP-A1- 0 118 222
- JP-A- 59 148 004
- JP-A- 2000 252 176
- JP-A- 2004 177 764

## Description

### TECHNICAL FIELD

The present invention relates to a car license plate (hereafter also referred to as CLP) having a retroreflective surface provided with an inclined authentication mark (hereafter also referred to as an authentication mark) and a retroreflective sheeting provided with an inclined authentication mark and used for the CLP.

More specifically, the invention relates to a CLP and a retroreflective sheeting used for the CLP, the CLP having a retroreflective surface provided with an inclined authentication mark, the inclined authentication mark being recognized from an area other than the car is traveling.

Furthermore specifically, the invention relates to a CLP and a retroreflective sheeting used for it, the CLP having a retroreflective surface and provided with an inclined authentication mark, the authentication mark being able to be recognized by an observer such as a police officer from outside a traveling zone of a vehicle, which improves safety of the observer.

Even more specifically, the invention relates to a CLP and a retroreflective sheeting used for it, the CLP being excellent in recognizability and does not hinder image recognition because an authentication mark does not appear on a taken image when the image of the CLP is checked by using a surveillance camera installed above a traveling direction of a vehicle.

### BACKGROUND ART

Conventionally, some proposals have been made for an authentication mark provided on a retroreflective sheeting, the mark having a directional visible area so as to help prevent tamper CLPs and car-related crimes using tamper CLPs.

Described in the U.S. Patent No. 4,082,426 is a reflective sheet including: a monolayer of microsphere-lenses 12 adapted to receive light rays incident on a front surface of the sheet; a spacing layer 14 of polymeric material covering the back surfaces of the microsphere-lenses and contoured so as to generally follow those back surfaces; a mirror reflection layer 16 coated over the spacing layer 14; and an image layer 15 F-disposed in an imagewise pattern between the spacing layer 14 and the mirror reflection layer 16, wherein the image layer 15 is transparent and the thickness of the image layer is greater in the valleys 20 of the spacing layer between the microsphere-lenses than on the curved peak areas 19 directly facing the back surfaces of the microsphere-lenses, whereby the 45-degree retroreflection from the image areas of the sheet is at least 30 percent less than the retroreflection from nonimage areas.

Described in the U.S. Patent No. 4,634,220 is an imaged sheet including: a monolayer of transparent microsphere-lenses; a continuous layer of transparent material covering at least back surfaces of the microsphere-lenses; and markings on a back surface of the layer of transparent material to be identified from a distance, each individual marking being associated with a microsphere-lens in an area where the image is formed, each individual marking being located on an axis that extends through a center of its associated microsphere-lens, and the axes being substantially parallel to each other for a specified image so that the markings are visible as an image from a predetermined direction with respect to the sheet. It is also described that different images are visible from two different directions.

Described in the U.S. Patent No. 4,645,301 is an improved substantially transparent sheet containing an authenticating image, which sheet is adapted to be adhesively bonded over information areas of a document without appreciably interfering with legibility of that information, the sheet containing a monolayer of transparent microlenses, and a transparent spacing layer covering at least the back surfaces of the microlenses, wherein a set of axial mirror reflection markings on the back surface of the transparent layer is visible as an authenticating image appearing on a front surface of the sheet only across a conical field of view having a central axis at a certain angle to the sheet and the authenticating image is retroreflective.

Described in the U.S. Patent No. 4,650,283 is a retroreflective sheeting including a monolayer of transparent microspheres partially embedded in a binder layer and a mirror reflection layer covering the back surfaces of the microspheres, wherein the binder layer is light-colored, some of the microspheres have tiny cavities, each opening through a back surface of a microsphere, and at least part of the openings are smaller than depths of the cavities, and the cavities being visible from the front of the sheet only across a conical field of view.

Described in the U.S. Patent No. 4,688,894 and the U.S. Patent No. 4,691,993 is a substantially transparent sheet including a monolayer of microlenses and a partially light transmissive mirror disposed behind rear surfaces of at least some of the microlenses such that, under retroreflective viewing conditions, the sheet is brightly retroreflective in the areas occupied by the mirror, there being an axial marking in the rear portion of or on the rear surface of at least some of the microlenses, which markings together are visible as an image across a predetermined conical field of view in ordinary diffuse light conditions.

Described in the U.S. Patent No. 4,708,920 are a sheet containing an integrated-directional image and including: (a) a monolayer of closely spaced transparent microlenses, (b) a means for supporting the microlenses in the monolayer, and (c) a set of axial markings of substantially equal size, each marking located at the rear of a microlens at a position such that the set of axial markings is visible throughout a selected conical field of view as an integrated-directional, half-tone image having gradations of light and dark areas.

Described in the U.S. Patent No. 4,714,656 is a contour-dependent directional imaged sheet including:
(a) a monolayer of closely spaced transparent microlenses,
(b) means for securing the microlenses to the sheet in a monolayer arrangement; and (c) a set of axial markings, each axial marking being located at the rear of a microlens such that the set of axial markings is visible with eyes from the front of the sheeting as a complete image only when the sheet is substantially in a predetermined nonplanar contour and is viewed within a predetermined conical field of view.

Described in the U.S. Patent No. 5,169,707 is a substantially transparent laminate including: a) a base sheet including microspheres arranged in substantially a monolayer with partially-light-transmissive reflectors disposed behind the rear surfaces thereof, the microspheres being at least partially embedded in a transparent binder layer; b) a cover sheet bonded to the front side of the base sheet; and c) a pattern of image-forming material disposed on the same side of the microspheres as the cover sheet; wherein the pattern is visible as a primary legend under ordinary diffuse light viewing conditions and under retroreflective viewing conditions, the legend being a substantially directionally variable image under ordinary diffuse light viewing conditions.

Described in the U.S. Patent No. 6,288,842 is a sheeting including: (a) at least one layer of microlenses, the layer having first and second sides; (b) a layer of material disposed close to the first side of the layer of microlenses; (c) an at least partially complete image formed in the material associated with each of a plurality of the microlenses, wherein the image contrasts with the material; and (d) a composite image, provided by the individual images, that appears to unaided eyes to be floating above or below the sheeting, or both.

Described in Japanese Patent Application Laid-Open (JP-A) No. 2003-211572 is a retroreflective article including a first layer having a substantially transparent layer with a flat first surface, and a second layer having a retroreflective element layer having a second surface, on which a mirror reflection layer is exposed. On the retroreflective article, an image is formed by steps of: A. providing a photoreactive resin layer on the mirror reflection layer of the second surface; B. partly acting the photoreactive resin by selective light irradiation; C. partly removing the selected region of the photoreactive resin layer; and D. forming the image by partially removing the mirror reflection layer.

Described in (JP-A) No. 2003-233336 is a retroreflective article formed with an image and including a first layer having a substantially transparent layer with a flat first surface, and a second layer having a retroreflective element layer having a second surface exposed at a mirror reflection layer. A method for forming the image includes the step A of installing a photoreactive resin layer on the mirror reflection layer of the second surface, the step B of partly causing the photoreactive resin to react by selective light irradiation, and the step C of partly removing the selected region of the photoreactive resin layer, and the step D of forming the image by making the exposed part of the mirror reflection layer into the non-mirror surface on the spot. With the method described in the U.S. Patent No. 4,082,426 and using ink, the image is not clear from a direction at 0° (a direction perpendicular to the sheet). Across the observation angle of 360°, the image is visible under retroreflective visible conditions with 45° incident light.

With the axial markings described in the U.S. Patent No. 4, 634, 220 (closest prior art) and the U.S. Patent No. 4, 645, 301, the image is visible when seen at an angle of about 8 to 12° to a perpendicular line and an observation angle is a 360° ring-shaped viewing area.

The directional image provided by cavities as described in the U.S. Patent No. 4,650,283 is visible from the front only across a cone of about 15°.

The axial markings described in the U.S. Patent No. 4,688,894 and the U.S. Patent No. 4,691,993 are visible as a dark image under diffuse light and retroreflective conditions within a conical field of view. The markings are visible as a bright image when viewed retroreflectively at an angle somewhat outside of and adjacent to the conical field of view. A sheet bearing two directional images may be formed, if after directing a laser beam in an imagewise fashion at the sheet at a first selected entrance angle, a laser beam is directed in an imagewise fashion at the sheet at a different selected entrance angle thereby forming two sets of markings. The respective images are visible within conical fields of view having centerlines at the entrance angles of the laser irradiation.

The axial markings described in the U.S. Patent No. 4,708,920 is visible as an integrated-directional photographic image throughout the conical field of view having a center line at an entrance angle of laser irradiation.

The axial markings described in the U.S. Patent No. 4,714,656 are visible from the front of the sheet as a complete image only when the sheet having the contour-dependent directional image is substantially in a predetermined nonplanar contour and is viewed within a predetermined conical field of view.

The retroreflective security laminate described in the U.S. Patent No. 5,169,707 and providing dual levels of verification includes the primary legend provided or the layer above the microspheres and lacquer similar to that of the U.S. Patent No. 4,082,426 and disposed behind the rear surfaces of some of the microspheres such that the laminate has retro-legends which are transparent under diffuse light conditions and are visible under retroreflective light conditions.

The floating composite image described in the U.S. Patent No. 6,288,842 is visible throughout a cone of about 80 to 90°.

Existence of the image described in JP-A No. 2003-211572 can be recognized clearly at an observation angle of 45°.

Existence of the image described in JP-A No. 2003-233336 can be recognized clearly at an observation angle of 45°.

As described above, conventionally known images include the image formed by using ink described in the U.S. Patent No. 4,082,426, and visible not from the front but at the angle of 45°; the images formed by using laser described in the U.S. Patent Nos. 4,634,220, 4,645,301, 4,650,283, 4,688,894, 4,691,993, 4,708,920, 4,714,656, and 6,288,842 and visible within the conical fields of view of certain angles; the combination of the primary legend provided on the layer above the reflective elements described in the U. S. Patent No. 5,169,707 and images described in the U.S. Parent No. 4,082,426 that is a known technique; and the images formed by partial removal or making into the non-mirror surface as described in the JP-A No. 2003-211572 and the JP-A No. 2003-233336.

### DISCLOSURE OF THE INVENTION

An image and a method of forming the image are not known, the image being formed by using laser and visible from at least one certain area outside a traveling zone of a vehicle as in the present application. This technique allows an observer to recognize a mark only from outside the traveling zone of the vehicle thereby improving safety of the observer, which is unknown, either.

Conventionally, a retroreflective CLP provided with an inclined authentication mark has been used for the purpose of prevention of tamper CLPs and car-related crimes using tamper CLPs. However, with the CLP having a retroreflective surface provided with the inclined authentication mark as conventionally known technique, an observer has to enter a traveling zone of a vehicle to recognize the authentication mark, which is risky.

Moreover, image recognition is hindered by the authentication mark appearing on a shot image when the image of the retroreflective CLP provided with the inclined authentication mark as conventionally known technique is checked by using a surveillance camera installed above a traveling direction of a vehicle.

An object of the present invention is to overcome the above-described drawbacks of the CLP provided with the inclined authentication mark as conventionally known technique.

It is a first object of the invention to provide a CLP allowing an observer such as a police officer to safely observe an authentication mark provided on the CLP and a retroreflective sheeting used for the CLP.

It is a second object of the invention to provide a CLP with excellent recognizability and a retroreflective sheeting used for the CLP which does not hinder image recognition because an authentication mark does not appear on a shot image when the image of the CLP is checked by using a surveillance camera installed above a traveling direction of a vehicle.

The invention provides a car license plate having a retroreflective surface provided with an authentication mark that is recognizable from a predetermined direction, in which the authentication mark is recognizable from outside a traveling zone of a vehicle provided with the license plate, thereby improving safety of an observer and image recognition efficiency by the surveillance camera, and thus the drawback is overcome.

There has been conventionally known CLP having the retroreflective surface. Similarly to such CLP, a CLP structure of united body obtained by attaching the retroreflective sheeting to the plate from the front face side or the back face side may be employed for the invention.

There has been the conventionally known inclined authentication mark combined with the retroreflective sheeting. As described in the U.S. Patent No. 4,082,426, these unique reflective characteristics also make the marking difficult for unauthorized persons to duplicate or "counterfeit".

In the invention, the inclined authentication mark may be combined with the retroreflective sheeting, thereby making the CLP difficult to be duplicated or counterfeited.

In the invention, the traveling zone of the vehicle is at least an area where a vehicle body may pass through and also includes additional area of 50 cm widths on both sides to ensure safety. It has a similar meaning when the vehicle is traveling backward.

As a method for providing the inclined authentication mark of the invention, laser may be irradiated to the retroreflective sheeting at a large entrance angle to make cavities in a mirror reflection layer disposed behind glass microspheres provided on the retroreflective sheeting in such a manner that the recognizable area of the authentication mark is positioned outside the traveling zone of the vehicle provided with the license plate.

There has been the conventionally known retroreflective sheeting for reflecting the incident light toward a light source and the sheet utilizing the retroreflectivity is widely used in the above-described field of application. A well-known retroreflective sheeting is an enclosed lens retroreflective sheeting, in which glass microspheres provided with a mirror reflection layer formed by vacuum deposition of metal (aluminum, in most cases) are used as retroreflective elements.

An example of the enclosed lens retroreflective sheeting is disclosed specifically in Japanese Patent Application Laid-Open No. 59-71848. Such an enclosed lens retroreflective sheeting may also be used for the invention. This document is cited instead of specific description of the retroreflective sheeting.

In the invention, as an irradiation source for making cavities in the mirror reflection layer behind the glass spheres, neodymiun-doped yttrium vanadate laser (hereafter also referred to as Nd : YVO4 laser; neodymium-doped yttrium aluminum garnet laser (hereafter also referred to as Nd:YAG laser), carbon dioxide gas laser, and the like may be used and the Nd : YVO4 is preferable. The reasons are: the Nd:YVO4 laser has higher energy conversion efficiency (excitation efficiency) than the conventional Nd:YAG laser and thus an oscillator can be made more compact and air cooling rather than water cooling may be employed as a cooling method of the oscillator; and because the Nd:YVO4 has the same excitation wavelength as the Nd : YAG laser, workpiece materials easily processed by the conventional Nd:YAG can also be used with the Nd:YVO4.

As a method for forming the cavities in the mirror reflection layer behind the glass spheres, it is possible to employ a method for partially removing the mirror reflection layer as described in JF-A No. 2003-211572 or a method for making the mirror reflection layer into the non-mirror surface described in Japanese Patent Application Laid-Open No. 2003-71848. These documents are cited instead of description.

According to the invention, the recognizable area has a horizontal angle range (β) of 25 to 75' and a vertical angle range (α) of 5 to 55° in view of safety of the observer and visibility of the authentication mark.

In the invention, the horizontal angle and the vertical angle are respectively defined as a horizontal component and a vertical component of an observation line, which connects a midpoint between both eyes of the observer and a center of the CLP, with respect to a horizontal line from the center of the CLP.

In the invention, the recognizable area is defined as an area in which an observer or a surveillance camera can recognize the authentication mark as an image with eyes or by using an optical magnifying device and the area includes not only an area in which the mark can be recognized with eyes but also an area in which the mark can be recognized using digital image processing. Typically, the recognizable area with eyes is as short as 5 to 10 m from the authentication mark depending on a size of the authentication mark. However, the distance is not particularly limited when using a telescope or a surveillance camera with a telephoto lens.

The recognizable area of the authentication mark of the invention preferably has a horizontal angle range of 30 to 60° and more preferably 35 to 55°. In this area, the above-described safety of the observer and visibility of the authentication mark are further improved.

The recognizable area of the authentication mark of the invention preferably has a vertical angle range of 10 to 35° and more preferably 15 to 25°. In this area, the above-described safety of the observer and visibility of the authentication mark are further improved.

In the invention, the CLP is provided with the authentication mark that can be recognized from at least one of right and left sides of the vehicle.

Although the inclined authentication mark of the invention is recognizable from at least one of the right and left sides of the vehicle, it is preferable that the mark can be recognized from both the right and left sides. Such CLP that is recognizable from both the right and left sides is preferable, because it is possible to recognize the authentication mark on the CLP of the invention as long as observation from at least one side of a road is possible even if observation from each side of the road is impossible due to a road condition.

It is preferable that the authentication marks recognizable from right and left sides of the vehicle with inclined authentication marks are provided in the same area.

A method including steps of: forming a first authentication mark by forming an opening 1 in a glass microsphere by first irradiation to an arbitrary area; and forming a second authentication mark by forming an opening 2 other than the opening 1 in the glass sphere by second irradiation to the same area but at a different angle from that of the first irradiation may be used as a method of providing the marks in the same area.

Moreover, for the purpose of improving the visibility to the observer, the authentication marks having recognizable areas in at least two or more directions may be combined and provided in the same area, thereby allowing an image of the authentication marks to appear as continuously changing when observed while changing a recognition angle.

As a method of providing the authentication mark appearing as continuously changing in the invention, laser may be first irradiated from a certain irradiation angle to form a pattern (e.g., a wavy line) and then, at a different irradiation angle of laser, a pattern slightly changed from the above pattern may be formed (e.g., a broken line slightly different from the above broken line). Two kinds of patterns provided at different irradiation angles may allow an image to appear as changing when observed while changing the recognition angle.

In the invention, it is preferable that more kinds of patterns such as three, four, or more kinds are formed and such patterns are formed with smaller changes in the irradiation angle of the laser in order to make the authentication mark change smoothly.

In the invention, it is preferable the authentication mark appears as continuously changing when observed from outside the traveling zone of the vehicle; irradiation angle of the laser has a horizontal angle range of 30 to 60° and more preferably of 35 to 55° and a vertical angle range of 10 to 35° and more preferably of 15 to 25°; and a plurality of patterns are formed with a laser in such irradiation angle ranges in order to further improve safety of the observer and the visibility of the authentication mark.

A retroreflective sheeting of the invention is previously provided with an authentication mark in such a manner that the authentication mark is recognizable from outside a traveling zone of a vehicle provided with a car license plate when the retroreflective sheeting is attached to the CLP.

In order to facilitate attaching the sheet to the CLP, it is preferable that the retroreflective sheeting of the invention is provided with the authentication mark in such a manner that the recognizable area of the authentication mark is positioned outside the traveling zone of the vehicle provided with the CLP when the sheet is attached to the CLP assuming that typical attaching operation is used.

To manufacture a typical CLP, the retroreflective sheeting is cut to be processed easily corresponding to a size of a plate for the CLP and then the cut sheet is attached to the plate for the CLP. Therefore, it is preferable to previously provide the authentication mark in the retroreflective sheeting, the authentication mark exerting when the sheet is attached to the CLP to facilitate cutting operation of the retroreflective sheeting and the attaching operation to the CLP plate.

The retroreflective sheeting of the invention is previously provided with the authentication mark in such a manner that a recognizable area has a horizontal angle range (β) of 25 to 75°, preferably 30 to 60°, and more preferably 35 to 55° and a vertical angle range (a) of 5 to 55°, preferably 10 to 35°, and more preferably 15 to 25° when the retroreflective sheeting is attached to the CLP.

The retroreflective sheeting of the invention is preferably previously provided with the authentication mark, when manufacturing the retroreflective sheeting, in such a manner that a recognizable area has a horizontal angle range (β) of 25 to 75°, preferably 30 to 60°, and more preferably 35 to 55° and a vertical angle range (α) of 5 to 55°, preferably 10 to 35°, and more preferably 15 to 25° when viewed from a vertical direction or a lateral direction to facilitate cutting operation of the retroreflective sheeting and the attaching operation to the CLP plate.

The retroreflective sheeting of the invention is provided with the authentication mark that is recognizable from both right and left sides of the vehicle when the retroreflective sheeting is attached to the CLP.

In the retroreflective sheeting of the invention, the authentication marks having recognizable areas in at least two or more directions are combined and provided in the same area, thereby allowing an image of the authentication marks to appear as continuously changing when observed while changing a recognition angle, when the retroreflective sheeting is attached to the CLP.

In the invention, when the retroreflective sheeting is manufactured, the authentication marks having the recognizable areas in at least two or more directions may be combined and provided in the same area, thereby allowing the image of the authentication marks to appear as continuously changing when observed while changing the recognition angle, and then the sheet may be attached to the CLP.

As a first effect, the present invention can provide a CLP allowing an observer such as a police officer to safely observe an authentication mark provided on the CLP and a retroreflective sheeting used for the CLP.

As a second effect, the invention can provide a CLP with excellent recognizability and a retroreflective sheeting used for the CLP that does not hinder image recognition because an authentication mark does not appear on a shot image when the image of the CLP is checked by using a surveillance camera installed above a traveling direction of a vehicle.

### BRIEF DESCRIPTION OF DRAWINGS

Fig. 1 shows a recognizable area of a prior-art car license plate.
Figs. 2A to 2C show a prior-art car license plate.
Fig. 3 shows a recognizable area of a car license plate in the present invention.
Figs. 4A to 4C show a car license plate of the invention.
Figs. 5A to 5C show the car license plate of the invention.

### BRIEF DESCRIPTION OF EMBODIMENTS

A preferred embodiment of the present invention will be described with reference to the drawings.

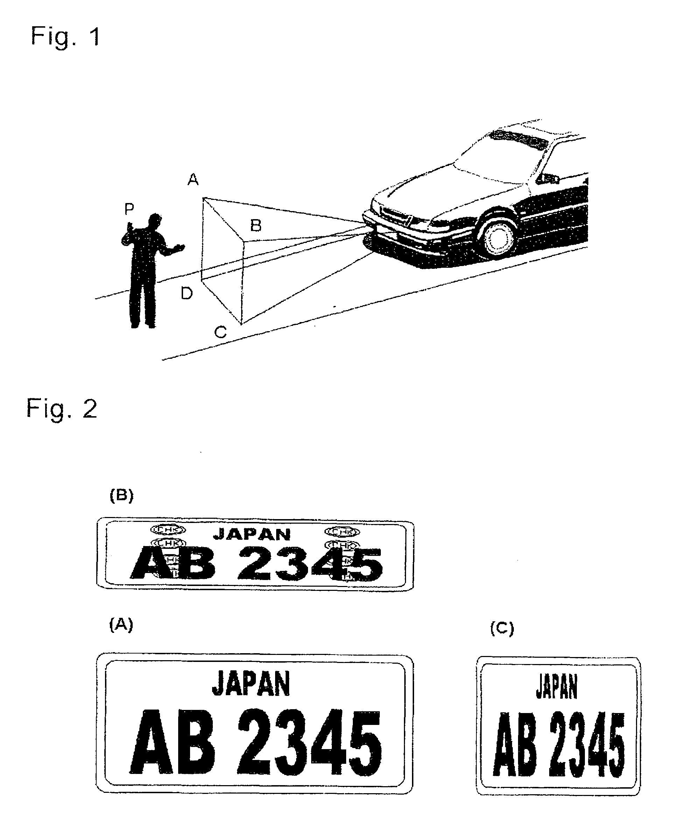

Fig. 1 shows a recognizable area of a car license plate of a conventional technique.

The recognizable area of authentication marks on the car license plate of the conventional technique is a polyangular pyramidal area shown by A-B-C-D in Fig. 1. A traveling zone of a vehicle and the recognizable area overlap each other and therefore an observer P needs to enter the traveling zone of the vehicle to observe the marks, which is risky.

Figs. 2A to 2C show a car license plate of the conventional technique.

Fig. 2A shows the CLP provided with the authentication marks of the conventional technique as seen directly from the front and the authentication marks are not visible.

Fig. 2B shows the CLP provided with the authentication marks of the conventional technique as seen from obliquely upward and the authentication marks are visible.

Fig. 2C shows the CLP provided with the authentication marks of the conventional technique as seen from obliquely right or left and the authentication marks are not visible.

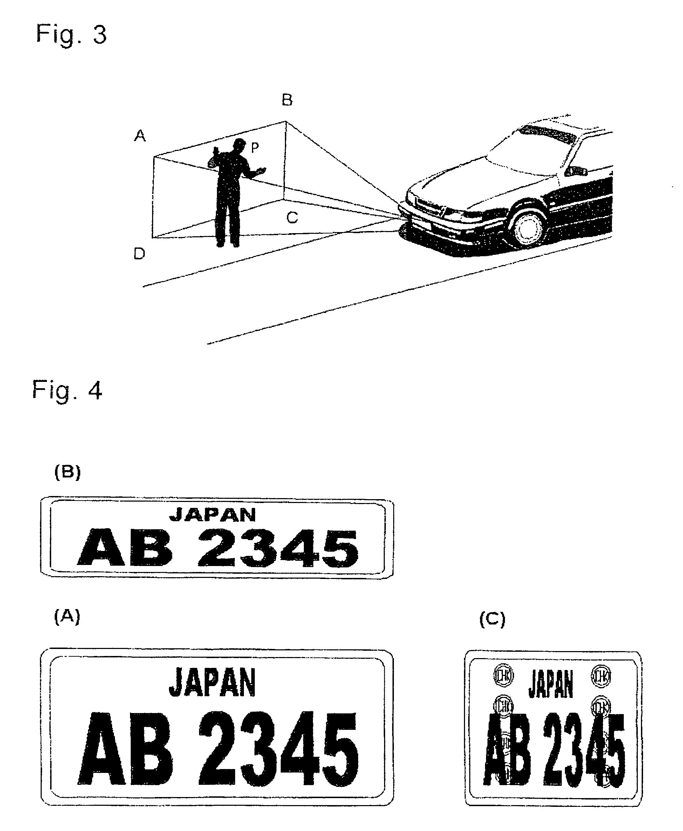

Fig. 3 shows a car license plate of the invention.

A recognizable area of authentication marks on the license plate of the conventional technique is a polyangular pyramidal area shown by A-B-C-D in Fig. 3. The recognizable area is outside a traveling zone of a vehicle and an observer P can observe the marks from outside the traveling zone of the vehicle, and thus, safety is improved as compared with the conventional technique.

Figs. 4A to 4C show the car license plate according to the invention.

Fig. 4A shows the CLP provided with the authentication marks of the conventional technique as seen directly from the front and the authentication marks are not visible.

Fig. 4B shows the CLP provided with the authentication marks of the conventional technique as seen from obliquely upward and the authentication marks are not visible.

Fig. 4C shows the CLP provided with the authentication marks of the conventional technique as seen from obliquely right or left and the authentication marks are not visible.

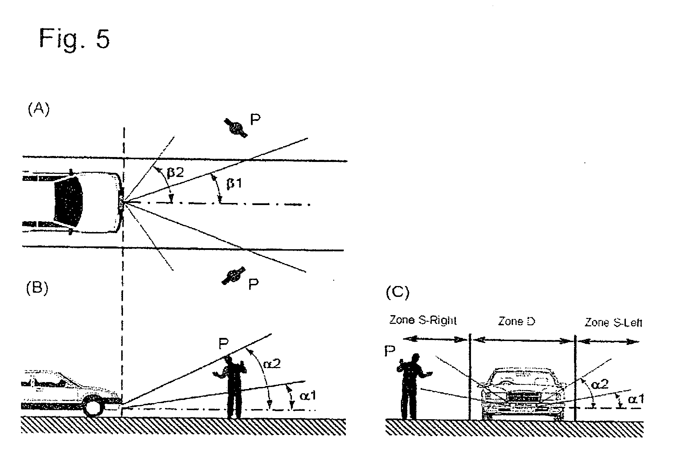

Figs. 5A to 5C show the recognizable area of the car license plate of the invention.

Fig. 5A shows the recognizable area of the car license plate of the invention in a horizontal direction. In the invention, a horizontal angle is in a range of β1 to β2 and the observer P can recognize the authentication marks from outside the traveling zone of the vehicle. The authentication marks of the invention are recognizable from at least one of right and left sides of the vehicle and preferably from both.

Fig. 5B shows the recognizable area of the car license plate of the invention in a vertical direction. In the invention, a vertical angle is in a range of α1 to a2 and the authentication marks are provided in such a manner that the recognizable area covers a line of sight of the observer P.

Fig. 5C is a view showing combination of Figs. 5A and 5B and is a view seen from the front of the vehicle, showing that the observer P can recognize the authentication marks from right and left safety zones outside the traveling zone D of the vehicle.

### EXAMPLES

The present invention will be further described below by using the examples.

### Example 1

Neodymium-doped yttrium vanadium tetraoxide (Nd:YVO4) laser of 15 to 20 kHz and of average electric power of 12 W (wavelength: 1064 nm) was irradiated to a retroreflective sheeting (trade name: Nikkalite^{™} 48012 produced by Nippon Carbide Industries (Hangzhou) CO., Ltd.) , as an engineering grade for the license plate, at a horizontal angle (β) of +45° and a vertical angle (α) of +20° to a front face of the sheet thereby obtaining a retroreflective sheeting for the car license plate provided with an authentication mark.

The authentication mark provided on the obtained sheet was visible from only around the angle of irradiation for forming the laser authentication mark.

### Example 2

The car license plate provided with the authentication mark obtained in the example 1 was irradiated with laser on a position different from a position already provided with the authentication mark of the at a horizontal angle (β) of -45° and a vertical angle (α) of +20° to the front face of the sheet thereby obtaining a retroreflective sheeting for the car license plate provided with authentication marks at two different angles.

The authentication marks provided on the obtained sheet were visible at only around the respective positions and from only around angles of irradiation for forming the laser authentication marks.

### Example 3

The car license plate provided with the authentication mark obtained in the example 1 was irradiated with laser on the same area already provided with the authentication marks at a horizontal angle (β) of -45° and a vertical angle (α) of +20° to the front face of the sheet to obtain a retroreflective sheeting for the car license plate provided with authentication marks at two different angles.

The authentication marks provided on the obtained sheet were visible in the same area and from only around the respective angles of irradiation for forming the laser authentication marks.

### Example 4

Neodymium-doped yttrium aluminum garnet (Nd:YAG) laser of 20 to 25 kHz and of average electric power of 18 W (wavelength: 1064 nm) was irradiated to a retroreflective sheeting (trade name: Nikkalite^{™} 48012 produced by Nippon Carbide Industries (Hangzhou) CO., Ltd.), as an engineering grade for the license plate, at a horizontal angle (β) of +45° and a vertical angle (α) of +20° to a front face of the sheet thereby obtaining a retroreflective sheeting for the car license plate provided with an authentication mark.

The authentication mark provided on the obtained sheet was visible from only around the angle of irradiation for forming the laser authentication mark.

### Example 5

carbon dioxide gas laser of average electric power of 50 W (wavelength: 10.6 µm) was irradiated to a retroreflective sheeting (trade name: Nikkalite^{™} 48012 produced by Nippon Carbide Industries (Hangzhou) CO., Ltd.), as an engineering grade for the license plate, at a horizontal angle (β) of +45° and a vertical angle (α) of +20° to a front face of the sheet thereby obtaining a retroreflective sheeting for the car license plate provided with an authentication mark.

The authentication mark provided on the obtained sheet was visible from only around the angle of irradiation for forming the laser authentication mark.

### Example 6

neodymium-doped yttrium vanadium tetraoxide (Nd:YVO4) laser of 15 to 20 kHz and of average electric power of 12 W (wavelength: 1064 nm) was irradiated to a retroreflective sheeting (trade name:Nikkalite^{™} 48012 produced by Nippon Carbide Industries (Hangzhou) CO., Ltd.), as an engineering grade for the license plate, in an angle range having center at a horizontal angle (β) of +45° and a vertical angle (α) of -20° to a front face of the sheet with a corel draw file introduced into a controller of a laser transmitter and an entrance angle controller in such a manner that an authentication mark is visible in a space about 1 cm above the reflective sheet thereby obtaining a retroreflective sheeting for the car license plate provided with the authentication mark formed of continuous composite lines in an aluminum layer provided on a focus forming layer.

The authentication mark provided on the obtained sheet appeared to be floating about 1 cm above a surface of the sheet and to be different shapes corresponding to movement of a field of view of an observer in an angle range having center at the incident direction of the laser.

### Example 7

neodymium-doped yttrium vanadium tetraoxide (Nd:YVO4) laser of 15 to 20kHz and of average electric power of 12 W (wavelength: 1064 nm) was irradiated to a retroreflective sheeting (trade name: Nikkalite^{™} 48012) produced by Nippon Carbide Industries (Hangzhou) CO., Ltd. at a horizontal angle (β) of +45° and a vertical angle (α) of +20° to a front face of the sheet in a state where the sheet is provided on the CLP thereby obtaining a retroreflective sheeting for the car license plate provided with the authentication mark about 45 mm x 45 mm in size.

When the obtained reflective sheet was provided on the CLP and an image of the CLP was taken from above, only numbers on the CLP could be recognized and the authentication mark could not be recognized.

### Comparative example 1

neodymium-doped yttrium vanadium tetraoxide (Nd:YVO4) laser of 15 to 20 kHz and of average electric power of 12 W (wavelength: 1064 nm) was irradiated to a retroreflective sheeting (trade name: Nikkalite^{™} 48012 produced by Nippon Carbide Industries (Hangzhou) CO., Ltd.), as an engineering grade for the license plate, at a horizontal angle (β) of 0° and a vertical angle (α) of 0° to a front face of the sheet thereby obtaining a retroreflective sheeting for the car license plate provided with an authentication mark.

The authentication mark provided on the obtained sheet could be recognized mainly from the front of the reflective sheet.

### Comparative Example 2

Similarly to the example 7 except that laser was irradiated at a horizontal angle (β) of 0° and a vertical angle (α) of +30°, a retroreflective sheeting for the car license plate provided with an authentication mark about 45 mm x 45 mm in size was obtained.

When the obtained reflective sheet was provided on the CLP and an image of the CLP was taken from above the front face, both numbers on the CLP and the authentication mark could be recognized, which might hinder recognition of the numbers.

### INDUSTRIAL APPLICABILITY

According to the invention, there is provided the CLP allowing an observer such as a police officer to safely observe the authentication mark provided on the CLP and the retroreflective sheeting used for the CLP and there is provided the CLP with excellent recognizability and the retroreflective sheeting used for the CLP which does not hinder image recognition because the authentication mark does not appear on the shot image when the image of the CLP is checked by using the surveillance camera installed above the traveling direction of the vehicle.

## Claims

1. A car license plate having a retroreflective surface provided with an authentication mark that is recognizable from a predetermined direction, wherein the authentication mark is recognizable from outside a traveling zone of a vehicle, and
**characterized in that**
a recognizable area has a horizontal angle range (β) of 25 to 75° and a vertical angle range (α) of 5 to 55°.

2. The car license plate according to claim 1 , wherein a recognizable area has a horizontal angle range (β) of 30 to 60° and a vertical angle range (α) of 10 to 35°.

3. The car license plate according to any one of claims 1 to 2, wherein the authentication mark that is recognizable from both right and left sides of the vehicle is provided.

4. The car license plate according to any one of claims 1 to 3, wherein the authentication marks that are recognizable from right and left sides of the vehicle are provided in the same area.

5. The car license plate according to any one of claims 1 to 4, wherein the authentication mark is provided by using laser.

6. The car license plate according to claim 5, wherein the laser is neodymium-doped yttrium vanadate laser.

7. The car license plate according to any one of claims 1 to 6, wherein the authentication marks having recognizable areas in at least two or more directions are combined and provided in the same area, thereby allowing an image of the authentication marks to appear as continuously changing when observed while changing a recognition angle.

## Patentansprüche

1. Autokennzeichen mit einer rückreflektierenden Oberfläche, die eine Markierung zur Authentifizierung aufweist, die aus einer vorbestimmten Richtung erkennbar ist, wobei die Markierung zur Authentifizierung von außerhalb des Fahrbereichs eines Fahrzeugs erkennbar ist, und
**dadurch gekennzeichnet dass**
ein erkennbarer Bereich einen horizontalen Winkelbereich (β) von 25 bis 75° und einen vertikalen Winkelbereich (α) von 5 bis 55° aufweist.

2. Autokennzeichen gemäß Anspruch 1, bei dem ein erkennbarer Bereich einen horizontalen Winkelbereich (β) von 30 bis 60° und einen vertikalen Winkelbereich (α von 10 bis 35° aufweist.

3. Autokennzeichen gemäß einem der Ansprüche 1 bis 2, bei dem die Markierung zur Authentifizierung, die sowohl von der rechten als auch der linken Seite des Fahrzeugs erkennbar ist, vorgesehen ist.

4. Autokennzeichen gemäß einem der Ansprüche 1 bis 3, bei dem die Markierungen zur Authentifizierung, die sowohl von der rechten als auch der linken Seite des Fahrzeugs erkennbar sind, in demselben Bereich vorgesehen sind,.

5. Autokennzeichen gemäß einem der Ansprüche 1 bis 4, bei dem die Markierung zur Authentifizierung mittels eines Lasers vorgesehen ist.

6. Autokennzeichen gemäß Anspruch 5, wobei der Laser ein Neodym-dotierter Yttrium-Vanadat-Laser ist.

7. Autokennzeichen gemäß einem der Ansprüche 1 bis 6, bei dem die Markierungen zur Authentifizierung, die erkennbare Bereiche in mindestens zwei oder mehr Richtungen aufweisen, kombiniert und in demselben Bereich vorgesehen sind, und es dadurch gestatten, dass ein Bild der Markierungen zur Authentifizierung während des Änderns eines Erkennungswinkels kontinuierlich wechselnd erscheint.

## Revendications

1. Plaque d'immatriculation de véhicule ayant une surface rétroréfléchissante pourvue d'un marquage d'authentification qui est reconnaissable depuis une direction prédéterminée, dans laquelle le marquage d'authentification est reconnaissable depuis l'extérieur d'une zone de déplacement d'un véhicule, et
**caractérisée en ce que**
une zone reconnaissable possède une plage d'angle horizontal (β) de 25 à 75° et une plage d'angle vertical (α) de 5 à 55°.

2. Plaque d'immatriculation de véhicule selon la revendication 1, dans laquelle une zone reconnaissable a une plage d'angle horizontal (β) de 30 à 60° et une plage d'angle vertical (α) de 10 à 35°.

3. Plaque d'immatriculation de véhicule selon l'une quelconque des revendications 1 à 2, dans laquelle est présent un marquage d'authentification qui est reconnaissable à la fois depuis les côtés droit et gauche du véhicule.

4. Plaque d'immatriculation de véhicule selon l'une quelconque des revendications 1 à 3, dans laquelle des marquages d'authentification qui sont reconnaissables depuis les côtés droit et gauche du véhicule sont présents dans la même zone.

5. Plaque d'immatriculation de véhicule selon l'une quelconque des revendications 1 à 4, dans laquelle le marquage d'authentification est réalisé au moyen d'un laser.

6. Plaque d'immatriculation de véhicule selon la revendication 5, dans laquelle le laser est un laser au vanadate d'yttrium dopé au néodymium.

7. Plaque d'immatriculation de véhicule selon l'une quelconque des revendications 1 à 6, dans laquelle des marquages d'authentification ayant des zones reconnaissables dans au moins deux directions ou plus sont combinés et présents dans la même zone, permettant ainsi à une image des marquages d'authentification d'apparaître comme changeant en continu lorsqu'elle est observée tout en changeant d'angle de reconnaissance.
